# Europäisches Patentamt

# European Patent Office

# Office européen des brevets

(11) Veröffentlichungsnummer: **0 117 985**
**B1**

(12) ## EUROPÄISCHE PATENTSCHRIFT

(45) Veröffentlichungstag der Patentschrift:
**18.05.88**

(51) Int. Cl.⁴: **B 29 C 33/38,** B 29 C 33/60

(21) Anmeldenummer: **84100577.0**

(22) Anmeldetag: **20.01.84**

(54) Verfahren zur Erstellung von Formen für das Spritzgiessen, insbesondere von Werkzeugen für das Spritzgiessen von Kunststoff.

(30) Priorität: **07.02.83 DE 3304073**

(43) Veröffentlichungstag der Anmeldung:
**12.09.84 Patentblatt 84/37**

(45) Bekanntmachung des Hinweises auf die Patenterteilung:
**18.05.88 Patentblatt 88/20**

(84) Benannte Vertragsstaaten:
**AT BE CH DE FR GB IT LI LU NL SE**

(56) Entgegenhaltungen:
**DE-A-2 513 777**
**DE-B-1 577 073**
**DE-C-537 839**
**FR-A-1 341 065**
**US-A-2 293 571**
**US-A-4 116 753**

(73) Patentinhaber: **Pütz, Alban, Heilgasse 10, D-5456 Rheinbrohl (DE)**

(72) Erfinder: **Pütz, Alban, Heilgasse 10, D-5456 Rheinbrohl (DE)**

(74) Vertreter: **Arentoft, Holger, Gartenstrasse 18, D-5461 Kasbach- Ohlenberg (DE)**

**0 117 985**

**Beschreibung**

Die vorliegende Erfindung betrifft ein Verfahren zur Erstellung von Formen für das Spritzgießen, insbesonders von Werkzeugen für das Spritzgießen von Kunststoff. Bisher mußten hochwertige Werkzeuge spanabhebend aus Edelstahlblocken herausgearbeitet werden; die Qualität und Maßgenauigkeit des gespritzten Werkstücks hingen und hängen immer noch vorrangig von der Härte des Werkzeugmaterials ab. Die spanabhebende Verarbeitung ist entsprechend langwierig und kostspielig, so daß bei komplizierteren Formen die Herstellung der Werkzeuge jedesmal eine hohe Investition erfordert, die sich nur bei sehr hohen Stückzahlen lohnt.

Wenn man zu der Erstellung von solchen Werkzeugen schreitet, muß man vorher möglichst sicher sein, daß das zu produzierende Werkstück die endgültige, für den Vertrieb und den Gebrauch optimale Gestalt aufweist. Änderungen an den Werkzeugen sind entweder gar nicht oder nur in kleinem Umfang, z. B. mittels Elektrofunkenerosion, durchführbar, eines langwierigen und recht kostenaufwendigen Vorganges. Änderungen größeren Ausmaßes können nur durch Anfertigung neuer Werkzeuge zustande gebracht werden.

Ein Werkzeug aus weniger hartem Material ist zwar billiger herzustellen, hält aber viel weniger "Schuß" aus und erzeugt Werkstücke geringerer Genauigkeit. Kostenmäßig lohnen sich solche billigeren Werkzeuge nur bei Gegenständen, die nicht genaue Maße aufzuweisen haben, und deren Stückzahlen relativ gering sind, wie z. B. bei Spielzeugen. Derartige einfache Werkzeuge für entsprechend einfache Werkstücke werden beispielsweise aus Zinklegierungen gegossen; sie werden aber auch als Hartnickel-Formsatze galvanoplastisch von einem Primärformkern abgeformt. Die auf Zinkbasis hergestellten gegossenen Werkzeuge weisen zudem den Nachteil auf, daß Zink zur Lunkerbildung neigt.

Diese einfachen Werkzeuge halten bestenfalls 5000 bis 10000 Fertigungsvorgängen stand, während Edelstahlwerkzeuge aus hochwertigem legiertem glashartem Stahl ohne weiteres eine Million "Schuß" vertragen.

Wollte man vor Erstellung von hochwertigen Werkzeugen die Werkstücke dadurch testen, daß man sie zunächst probeweise mit einfacheren Werkzeugen herstellt, müßte man erstens die immer noch relativ hohen Kosten der Probewerkzeuge tragen und zum anderen das Risiko laufen, daß die Testversuche wegen der ungenügenden und unsicheren Genauigkeit mehr oder weniger wertlos sein könnten.

Die hohen Kosten der Erstellung von hochwertigen Spritzwerkzeugen nach dem bisherigen Verfahren blockieren die Beweglichkeit der Spritzgießtechnik ganz erheblich. Jede Herstellung neuer Modelle ist ein großes Investitionsrisiko. Dort wo ein Modell auf dem Markt "eingefahren" ist, spielen die hohen Werkzeugkosten zwar eine nachrangige Rolle. Sobald aber der Markt Änderungen verlangt, erscheint der Zwang zur Neuinvestition.

Diese Verhältnisse sind sowohl für die Kunststoffindustrie allgemein als insbesondere für die Reifenindustrie typisch, die sich z. Zt. in einer Phase dauernder Innovation befindet, weil sie immer noch nach besseren Profilen für die Winterreifen sucht, als Ersatz für die Spikes-Reifen. Bei Testversuchen werden die Profile oft aus glatten Projektoren herausgeschnitten, denn die Erstellung von Kleinstserien im Spritzgußverfahren ist zu teuer, zumal für einen einzigen Reifen sechs und mehr segmentenförmige Werkzeuge erforderlich sind, die dann zu einem Gesamtwerkzeug zusammengesetzt werden. Formbedingte Änderungen an Spezialreifen wie Reifen für den Straßen- und Erdbau, für Ackerschlepper und für geländegängige Fahrzeuge, bringen im Verhältnis zu den Stückzahlen viel zu hohe Kosten.

Ähnliche Kostenschwierigkeiten treten auch beim Spritzgießen von Metall zu Tage, obwohl hier die Werkzeuge nicht ganz so kostspielig sind, allerdings auch nicht so haltbar.

Diese Problematik ist alt und beschäftigte die Fachleute schon vom Aufkommen der Extruder an. Bereits 1942 erschien die US-PS 2 293 571 STÖSSEL, die eine im Prinzip technisch machbare Problemlösung vorschlug, indem aus einem leicht formbaren Material (vorgeschlagen wurde ein geeignetes Metall) eine Primärform hergestellt und im Elektrolyse- oder Galvanikverfahren mit einem Überzug aus einem Metall niederen Schmelzpunkts, wie z. B. Zinn, versehen wurde. Auf diese Trennschicht wurde dann mit einer Spritzpistole ein Metall hohen Schmelzpunkts, wie z. B. Edelstahl. in geschmolzenem Zustand aufgespritzt, das die harte Oberfläche der zu erstellenden Form bildete. Alsdann erwärmte man das Ganze soweit, daß die niederschmelzende Trennschicht schmolz; man konnte dann das neu erstellte Formteil vom Primärformkern lösen und mit einer unnachgiebigen Formmasse hinterfüllen.

Wie bereits gesagt, zeigte dieses Verfahren zwar im Prinzip den richtigen Weg, wies aber erhebliche technische Mängel auf und hat sich nicht durchsetzen können. Schon das Aufbringen der Trennschicht mittels Elektrolyse oder Galvanik war zu kostspielig und zu umständlich, ferner wurde die dünne niederschmelzende Metalltrennschicht schon beim Aufspritzen der sehr viel heißere Formschicht teilweise weggeschmolzen. Schließlich führte die für die Abtrennung erforderliche hohe Temperatur (Schmelzpunkt des Zinns) zu Verwerfungen und stellte die Genauigkeit der fertigen Form in Frage. Der Zwang, deswegen den Primärformkern aus Metall oder aus einem ähnlich stabilen Material zu fertigen, brachte erhebliche Herstellungskosten, und die als Folge der Ablösung der Form von dem Formkern zwangsläufig in Rechnung zu stellende Verwerfung erforderte in vielen Fällen, wo es um Maßgenauigkeit ging, Messungen und Ausbesserungen vor dem nächsten Gießvorgang.

Die vorliegende Erfindung geht von dem soeben beschriebenen Stand der Technik aus. Sie hat zur Aufgabe, die Mängel an dem bekannten Verfahren nach der US-PS 2 293 571 sowie die sonstigen aufgeführten Erschwernisse an dem einschlägigen Formenbau zu beseitigen und ein Verfahren zur Erstellung von Formen für

2

das Spritzgießen zu schaffen, die einerseits wesentlich schneller und sehr viel kostengünstiger herstellbar und zum anderen ebenso hochwertig sind und ebenso harte und genaue Formflächen aufweisen wie die qualitativ besten aus Edelstahlblöcken spanabhebend herausgearbeiteten Werkzeuge.

Diese Erfindungsaufgabe wird dadurch gelöst, daß auf einen Primärformkern zunächst eine aus einer wässerigen Lösung von einem Hydrosol, einem Latex, Acrylharz, Quarzmehl und Alkydlack bestehende wasserfeste Deckschicht und nach deren Austrocknen eine aus einer wässerigen Lösung von Leim, Kohlehydraten, Quarzmehl und Metallpulver bestehende Trennschicht aufgetragen wird, wonach, Keramik oder Metall auf den derart vorbereitete Formkern aufgespritzt wird und eine Metall- bzw. Keramikformschale bildet, die nach anschließender Hinterfüllung mit unnachgiebigem Metarial ein Formteil darstellt, das mittels Eindringens von Wasser in die wasserlösliche Trennschicht vom Primärformkern ablösbar ist. Die wasserfeste, unmittelbar auf den Primärformkern aufzutragende Deckschichtlösung kann wie folgt zusammengesetzt sein:

| Latex | 38 | Gewichts-% |
| Wasser | 25 | - -% |
| Quarzmehl | 25 | - -% |
| Acrylharz | 8 | - -% |
| Hydrosol | 3 | - -% |
| Alkydlack | 1 | - -% |

Die Deckschicht hat zum Zweck, den Primärformkern vor Beeinträchtigungen zu schützen, die bei den infolge des Aufsprühens von Edelstahl oder Keramik entstehenden hohen Temperaturen sonst zustande kommen könnten.

Die Trennschicht wird durch Aufsprühen einer Trennschichtlösung folgender Einzelelemente

| entspanntes Wasser | 38 | Gewichts-% |
| Quarzmehl | 36 | - -% |
| Flüssigzucker | 15 | - -% |
| Leim | 8 | - -% |
| Metallpulver (Ni) | 3 | - -% |

gebildet. Wie beim wasserlöslichen Deckschicht handelt es sich um einfache und handelsübliche Stoffe.

Die in die aufgespritzte und vom Formkern einzubringende Hinterfüllung kann aus mit Quarzsand, Metallpulver o.dgl. verstärktem Epoxydharz oder auch aus Metallguß bestehen.

In einer bevorzugten Ausführungsform der Erfindung wird die Hinterfüllung in ein auf den Formkern und auf die durch Aufspritzen erstellte Metallformschale aufgestülptes Gehäuse eingefüllt.

Dieses Gehäuse kann mit einem Deckel versehen sein, der mit einem kegelmantelförmig gestalteten Deckelrand allseitig in das Gehäuse eingreift und auf der Hinterfüllung aufliegt.

In einer bevorzugten Ausführungsform der Erfindung wird nach dem Aufspritzen einer Edelstahlschale auf den Formkern eine zusätzliche Kupferschicht auf die Edelstahlschicht aufgetragen.

## Ausführungsbeispiel

Das in der Folge beschriebene Ausführungsbeispiel ist auf die erfindungsgemäße Erstellung von Formen (Werkzeugen) für das Spritzgießen von Kunststoffwerkstücken bezogen.

Es zeigen:

Figur 1   die Frontansicht einer mit einem solchen Werkzeug zu erstellenden Kunststoffschale (Prototyp) in perspektivischer Sicht,

Figur 2   die Kunststoffschale Fig. 1 in einer Rückansicht,

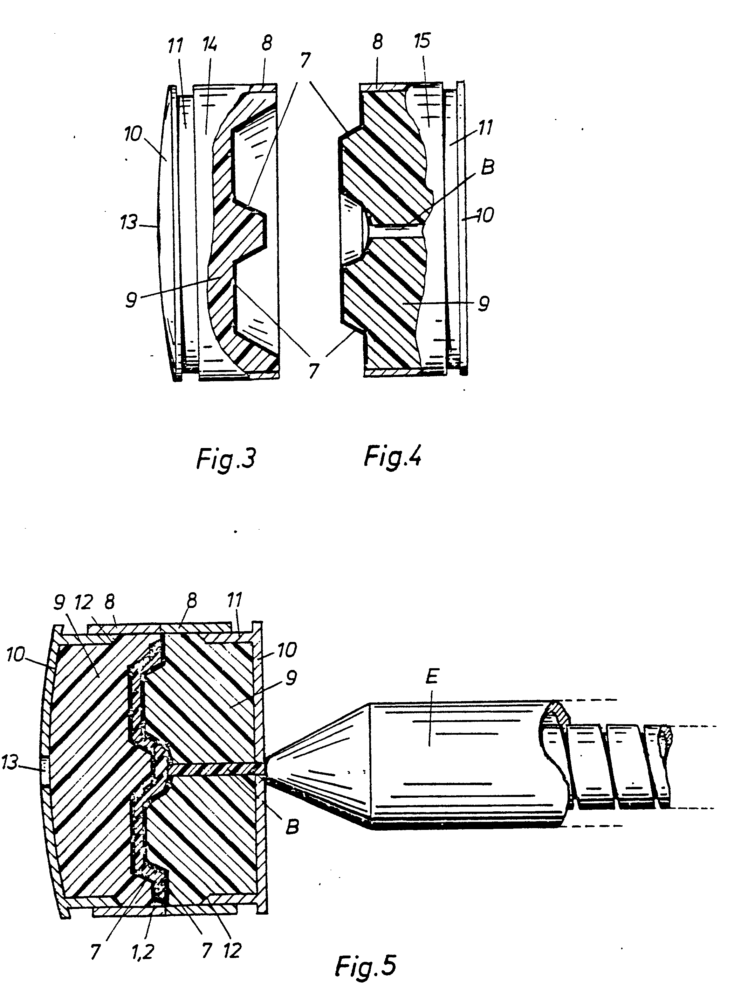

Figur 3   den extruderfernen Teil des Werkzeugs, teilweise im Schnitt X-X der Fig. 1, bestehend aus einer erfindungsgemäßen, der Oberflächengestalt der Kunststoffschale Fig. 1 entsprechenden Edelstahl-Formschale mit einer Epoxydharz-Quarzsand-Hinterfüllung und in einem Stahlgehäuse mit Stahldeckel gebettet,

Figur 4   den extrudernahen Teil des Werkzeugs, teilweise im Schnitt X-X der Fig. 2, bestehend aus einer erfindungsgemäßen, der Oberflächengestalt der Kunststoffschale Fig. 2 entsprechenden Edelstahl-Formschale mit einer Epoxydharz-Quarzsand-Hinterfüllung, gebettet in einem Stahlgehäuse,

Figur 5   das aus den Werkzeugteilen Fig. 3 und Fig. 4 zusammengesetzte Werkzeug am Extruder, im Schnitt X-X der Figuren 3 und 4 (der Spritzeinheit des Extruders teilweise im Schnitt),

Figur 6   den extruderfernen Werkzeugteil Fig. 3, hergestellt an einem der Oberfläche der Schale Fig. 1 entsprechend gestalteten Primärformkern aus Gips, umgeben von einem Stahlgehäuse mit Deckel, das die aus Epoxydharz und Quarzsand bestehende Hinterfüllung aufnimmt,

Figur 7   eine stark vergrößerte Darstellung des Ausschnittes "A" der Fig. 6, jedoch ohne das Symbol der Hinterfüllung,

Figur 8   das Stahlgehäuse mit Deckel, beide in perspektivischer Sicht und

Figur 9   die beiden Werkzeuge mit Hinterfüllung aus Metallguß und mit entsprechend vereinfachtem Gehäusedeckel.

Die auf den Figuren angebrachten Bezugsziffern zeigen an:

| | |
|---|---|
| 1, 2 | Prototypen des zu erstellenden Werkstücks |
| 3 | Primärformkern |
| 4 | Unterlage für den Primärformkern 3 |
| 5 | wasserfeste Deckschicht auf dem Primärformkern 3 |
| 6 | wasserlösliche Trennschicht |
| 7 | Edelstahlschicht |
| 8 | Gehäuse um die Edelstahlschicht 7 |
| 9 | Hinterfüllung an der Edelstahlschicht 7 |
| 10 | Deckel des Gehäuses 8 |
| 11 | Deckelrand |
| 12 | kegelmantelförmige Schräge des Deckelrandes 11 |
| 13 | Öffnung in der Deckelmitte |
| 14 | extruderfernen Werkzeugteil |
| 15 | extrudernahen Werkzeugteil |
| 16 | metallische Hinterfüllung |
| 17 | Schrauben zur Befestigung des randlosen Deckels 10 |
| 18 | Kupferschicht auf der Edelstahlschicht 7 |
| A | Ausschnitt aus Fig. 6 (Fig. 7) |
| B | Angußbohrung im Werkzeugteil 15 |
| E | Spritzteil des Extruders |

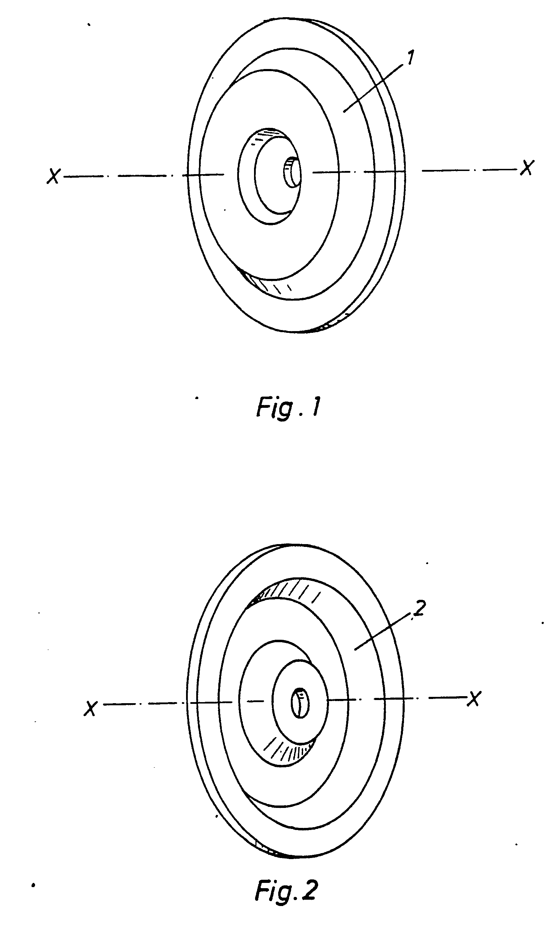

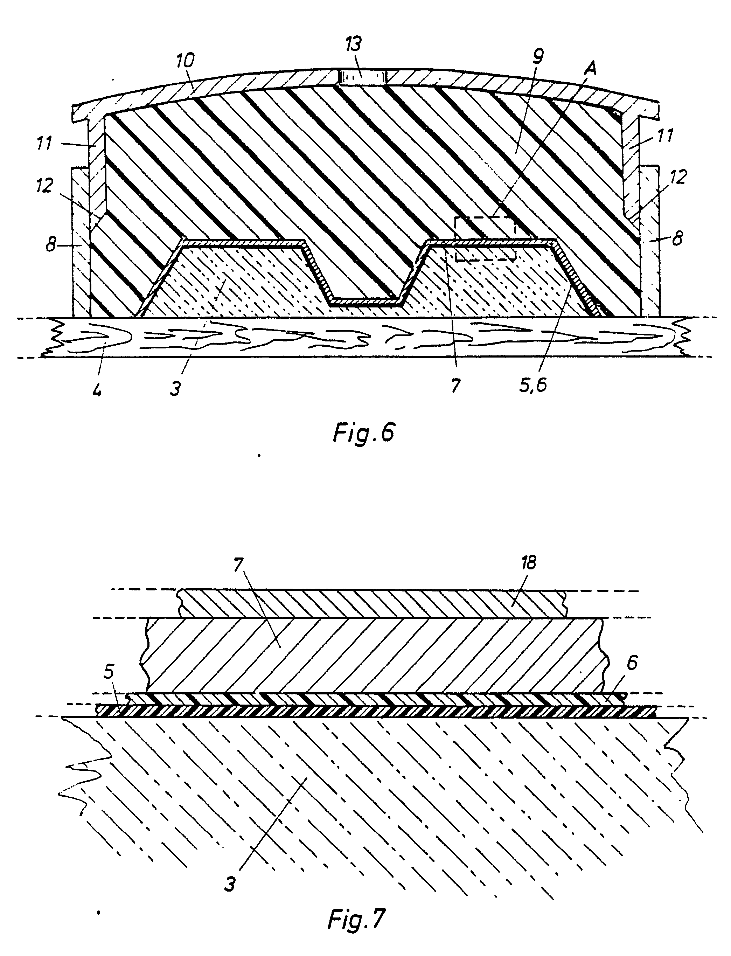

Zunächst wird anhand von Prototypen 1,2 (Figuren 1 und 2) Primärformkerne 3 (Fig. 6) aus Gips erstellt. Der auf Fig. 6 gezeigte Primärformkern 3 entspricht der Oberflächengestalt des Prototyps 1. Der dem Prototyp 2 (Fig. 2) entsprechende Primärformkern (nicht gezeichnet) ist in analoger Weise aus Gips gegossen. Für die Primärformkerne können jedoch auch andere Materialien verwendet werden, sofern sie ohne sich zu verformen, Temperaturen um 100°C aufweisen, also z. B. Holz, Kunststoff u.ä. Der Primärformkern 3 muß wasserfest abisoliert, fettfrei und griffig sein.

Jeder Primärformkern 3 wird auf je eine geometrisch ebene Unterlage 4 gestellt und die im Anspruch 2 angegebene wasserfeste Deckschicht 5 mit einer handelsüblichen Farbsspritzpistole bis zu einer Schichtstärke 15 bis 30 μm (my) auftragen. Nach Austrocknen der Deckschicht 5 wird die im Anspruch 3 beschriebene wasserlösliche Trennschicht 6 aufgespritzt, und zwar bis etwa die gleiche Schichtstärke wie bei der Deckschicht 5. In den meisten Fällen reicht eine Gesamtschichtstärke 30 μm (my) für die beiden Schichten.

Zu der Natur der in den Ansprüchen 2 und 3 spezifizierten Lösungen ist zu sagen, daß die wasserfeste Lösung 5 den Zweck hat, einen wasserfesten Film auf der Oberfläche des Primärformkerns 3 zu schaffen, der auch temperaturfest ist. Die wasserlösliche Lösung 6 bildet auf der wasserfesten Schicht 5 einen wasserlöslichen Film, der derart zusammengesetzt ist, daß er selbst unter dem Aufprall und der Wärmewirkung des Metallspritzstrahls keine Verbindung mit der wasserfesten Schicht 5 eingeht, also von diesem chemisch und mechanisch betrennt bleibt. Bei Primärformkernen 3 aus Gips, Holz, Kunststoff u.ä., an denen keine Temperaturen über rd. 100°C entstehen, kann die gleiche wasserfeste Schicht 5 für das Aufspritzen von vielen Edelstahlformen verwendet werden.

Die in den Ansprüchen 2 und 3 angegebenen Rezepturen sind als optimale Beispiele zu werten. Innerhalb des in Anspruch 1 angegebenen Rahmen (ohne spezifische Mengenangabe) können mehrere brauchbare Rezepturen zusammengestellt werden.

Das Austrocknen der Schichten 5, 6 kann, wenn gewünscht, durch Wärme beschleunigt werden. Zum Zwecke einer besonders glatten Oberfläche des Primärformkerns kann man den Formkern vorsichtig abschleifen, muß dabei aber beachten, daß die Trennschicht 6 nicht durchgeschliffen wird.

Dann trägt man mit der Metallspritzpistole geschmolzenes Edelstahl auf die beiden Primärformkerne 3 auf. Beim Aufspritzen ist darauf zu achten, daß keine Überhitzung der Edelstahlschicht 7 eintritt. Der Spritzabstand Spritzpistole-Primärformkern sollte mindestens etwa 30 bis 50 cm betragen, und das Aufspritzen erfolgt in mehreren Abschnitten, so daß nach jedem Spritzabschnitt eine kurze Pause eingelegt wird, damit das gespritzte Edelstahl sich jeweils abkühlen kann. Bei Temperaturen uber etwa 130°C gibt die Trennschicht 6 die Edelstahlschicht 7 frei und läßt Druckluft bzw. Druckgas zwischen Primärformkern und Edelstahlschicht eindringen. Die Edelstahlschicht hebt von dem Primärformkern ab und ist danach unbrauchbar.

Hier wirkt der hohe Gehalt an Kohlehydraten (Flüssigzucker, Anspruch 3) als Warnsignal: bereits bei 100°C verbrennt der Flüssigzucker unter Rauchentwicklung. Der Bediener der Spritzpistole weiß dann, daß er eine kurze Pause einlegen muß, damit die Edelstahlschicht abkühlen kann.

Um eine Stärke der Edelstahlschicht 7 auf etwa 1 mm zu erreichen, bedarf es 15 bis 20 Einzelschichten. Für die Verwendung der Edelstahlschalen 7 als Formteile eines Werkzeugs zum Kunststoff-Spritzgießen braucht man jedoch derart dicke Schalen nicht, sondern kann sich mit wesentlich geringeren Stärken begnügen, etwa zwischen 0,1 und 0,5 mm, denn im Verbund des Werkzeugs hat die Edelstahlschale 7 keinerlei tragende Funktion, wie weiter unten ausgeführt werden soll. Entscheidend für die Verwendung der Edelstahl-Formschale 7 als Spritzgußform ist in erster Linie die Härte des Materials. Im Gegensatz zu jedem anderen Verformungsprinzip spielt in dem vorliegenden Verfahren die Materialhärte keine Rolle: selbst die härtesten Chromstähle lassen sich ohne jede Schwierigkeit flammspritzen.

Falls das Auftragen des Edelstahls in einer sauerstoffreien Spritzkabine nach DE-GM 82 25 728 (später OS 32 33 925) stattfindet, werden die an den Primärformkernen 3 ausgebildeten Edelstahl-Formschalen 7 sinterfrei sein und eine ähnliche Struktur aufweisen wie gegossene oder mittels Spanabhebung erstellte Werkstücke. Sie lassen sich dann auch dementsprechend polieren. Beim Aufspritzen von Edelstahl, insbesondere von Cr-V-Stahl oder Mo-Al-Stahl, in einer mit Stickstoff gefüllten Spritzkabine erfolgt automatisch eine zusätzliche Nitrohärtung.

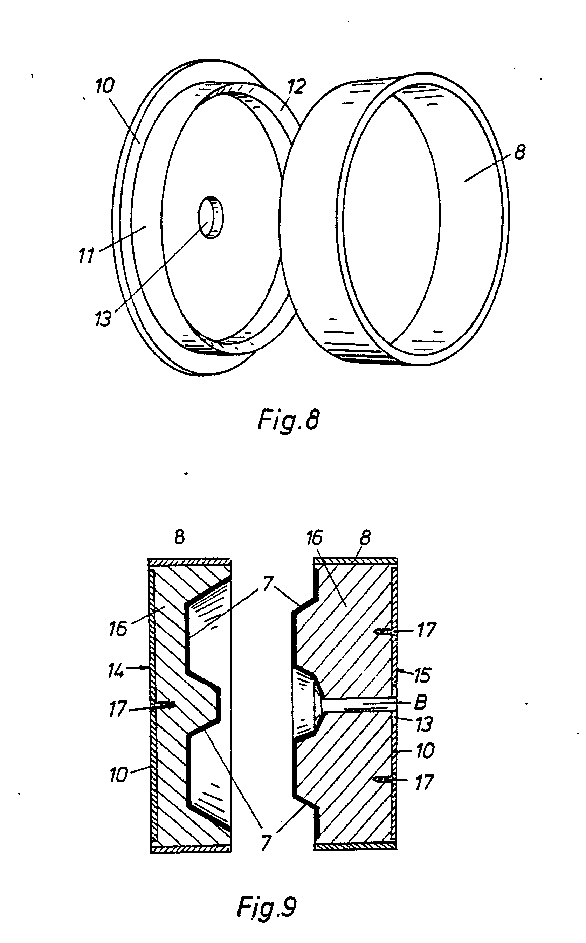

Nach Auskühlen der auf den Primär-Formkernen 3 aufliegenden Edelstahl-Formschalen 7 wird um jede Formschale 7 je ein nach oben und unten hin offenes Gehäuse 8 aufgestellt und bis zum Rand mit einer Mischung von Epoxydharz und Quarzsand, der Hinterfüllung 9, gefüllt. Auf das Gehäuse 8 wird ein Deckel 10 gelegt, der mit einem Deckelrand 11 in das Gehäuse 8 hineinragt. Der Deckelrand 11 weist eine kegelmantelförmige Schräge 12 auf. Der Deckel 10 besitzt in seiner Mitte eine Öffnung 13. Der Deckel 10 wird derart an das Gehäuse 8 herangedrückt, daß die Epoxydharz-Quarzsandmischung überall fest anliegt, auch an der Edelstahl-Formschale 7. Der Deckelrand 11 ist so dimensioniert, daß er nur mit Mühe in das Gehäuse 8 einzubringen ist, daß er also keine Sicherung braucht, um nicht fahrlässig herausgezogen werden oder gar herausfallen kann. Gehäuse 8 und Deckel 10 sind auf Figur 8 dargestellt.

Die Hinterfüllung 9 kann auch aus einer Mischung Epoxydharz-Eisenpulver, Epoxydharz-Glaspulver (oder Glaskügelchen) bestehen; sie muß nur unbedingt unelastisch und unnachgiebig sein und sehr große Kräfte (Spritzkraft einerseits und Zuhaltekraft andererseits) aufnehmen ohne nachzugeben.

Nach Einfüllen der Hinterfüllung 9 wird Wasser zwischen dem Primärformkern 3 und der Edelstahlschale 7 eingebracht. Die wasserlösliche Trennschicht 6 löst sich auf, und das Werkzeug 14, 15 läßt sich vom Primärformkern trennen.

An dem in dem Werkzeugteil 15 angeordneten Angußbohrung B wird die Spritzeinheit E eines Extruders mit dem Gesamtwerkzeug 14, 15 verbunden. Auf den extruderfernen Werkzeugteil 14 wirkt die Zuhaltekraft, die der auf den extrudernahen Werkzeugteil einwirkenden Spritzkraft entspricht; das Gesamtwerkzeug 14, 15 wird von diesen beiden Kräften zusammengedrückt. Die Kräfte sind sehr groß; je nach Maschinengröße und Werkstückgröße kann sie zwischen 10 und 5000 Mp betragen. Da diese Kräfte auf die Deckel 10 einwirken, wird jede eventuelle Nachgiebigkeit der Hinterfüllungen 9 von den Deckeln aufgefangen, indem die Deckelränder 11 sich in die Hinterfüllungen 9 hineinschieben, soweit noch irgend eine Nachgiebigkeit dort vorhanden sein sollte.

Eine absolute Unnachgiebigkeit der Hinterfüllungen ist dadurch erreichbar, daß jede Hinterfüllung aus niederschmelzendem Metall erstellt wird, das in geschmolzenem Zustand in das Gehäuse 8 eingegossen wird. Dieses Vorgehen setzt voraus, daß die Edelstahlschalen 7 vorher auf eine Temperatur gebracht werden, die dem Schmelzpunkt des als Hinterfüllung vorgesehenen Metalls nahe ist, weil die Edelstahlschale sich sonst werfen könnte. Daher muß der Primärformkern 3 aus entsprechend wärmefestem Material erstellt sein, z. B. aus Kupfer (Schmelzpunkt rd. 1080°C), während die Hinterfüllung dann aus Zink (Schmelzpunkt rd. 420°C) oder aus Bronze (Schmelzpunkt rd. 700°C) bestehen kann.

Beim Aufheizen des Primärformkerns 3 und der Edelstahlschale 7 verbrennen Trennschicht 6 und Deckschicht 5, so daß die Abtrennung des Werkstückteils 14, 15 beim Einfüllen der metallischen Hinterfüllung 16 bereits stattgefunden hat.

Da die metallische Hinterfüllung 16 gänzlich unnachgiebig ist, kann der Deckel 10 auf die Zuhaltekräfte einwirken, ohne Rand und Kragen auf der Hinterfüllung aufliegen und mit Schrauben 17 o.dgl. festgehalten werden vgl. Fig. 9.

Die metallische Hinterfüllung ist beim Metallspritzguß geboten, ferner bei der Herstellung von Automobilreifen, indem das Spritzgießen bei diesem Vorgang unter Temperaturen erfolgt, die ein Primärformkern aus Gips, Kunststoff u.ä. nicht verträgt. Die Erställung von Werkzeugen für die Reifenfabrikation erfolgt segmentweise, und diese Segmentwerkzeuge werden dann zu einem ringförmigen Gesamtwerkzeug zusammengebaut.

Wenn es darum geht, eine möglichst schnelle und gleichmäßige Wärmeableitung von der Edelstahlschale 7 zu erhalten, ist es zweckmäßig, nach Aufspritzen und Abkühlen der Edelstahlschale 7 eine Kupferschicht 18 aufzuspritzen.

**Patentansprüche**

1. Verfahren zur Erstellung von Formen für das Spritzgießen, insbesondere von Werkzeugen für das Spritzgießen von Kunststoff, indem die Form aus einem Primärformkern besteht, der mit einer entfernbaren Trennschicht und darauf mit einer auf diese aufgesprühten Schicht aus geschmolzenem Metall versehen wird, dadurch gekennzeichnet, daß auf den Primärformkern (3) zunächst eine aus einer wässerigen Lösung von einem Hydrosol (z. B.eine wässerige Dispersion von Acrylsäure), einem Latex (z. B. Polyvinylazetat), Acrylharz, Quarzmehl und Alkydlack bestehende wasserfeste Deckschicht (5) und nach deren Austrocknung die aus einer wässerigen Lösung von Leim, Kohlehydraten, Quarzmehl und Metallpulver bestehende Trennschicht (6) aufgetragen wird, wonach Keramik oder Metall auf den derart vorbereiteten Formkern (3, 5, 6) aufgespritzt wird und eine Keramik- bzw. Metallformschale (7) bildet, die nach anschließender Hinterfüllung (9, 16) mit unnachgiebigem Material ein Formteil (14, 15) darstellt, das mittels Einbringens von Wasser in die wasserlösliche Trennschicht (6) vom Primärformkern (3) ablösbar ist.

2. Verfahren nach Anspruch 1, dadurch gekennzeichnet, daß die wasserfeste Deckschichtlösung (5) wie folgt zusammengesetzt ist:

| | | | |
|---|---|---|---|
| Latex (z. B. Polyvinylazetat) | 38 | Gewichts | -% |
| Wasser | 25 | - | -% |
| Quarzmehl | 25 | - | -% |
| Acrylharz (Acrylsäure) | 8 | - | -% |
| Hydrosol (z. B.HYDROSOL d.Hüls-AG) | 3 | - | -% |
| Alkydlack (z. B.ALKYDAL d.Hüls-AG) | 1 | - | -% |

3. Verfahren nach Anspruch 1, dadurch gekennzeichnet, daß die wasserlösliche Trennschichtlösung (6) wie folgt zusammengesetzt ist:

| | | | |
|---|---|---|---|
| entspanntes Wasser | 38 | Gewichts | -% |
| Quarzmehl | 36 | - | -% |
| Flüssigzucker | 15 | - | -% |
| Leim | 8 | - | -% |
| Metallpulver (Ni) | 3 | - | -% |

4. Verfahren nach Anspruch 1, dadurch gekennzeichnet, daß die Hinterfüllung (9) aus mit Quarzsand, Metallpulver o. dgl. verstärktem Epoxydharz besteht.

5. Verfahren nach Anspruch 1, dadurch gekennzeichnet, daß die Hinterfüllung (16) aus Metallguß besteht.

6. Verfahren nach Anspruch 1, dadurch gekennzeichnet, daß die Hinterfüllung (9, 16) in ein den Primärformkern (3) und die Metallformschale (7) aufgestülptes Gehäuse (8) eingefüllt wird.

7. Verfahren nach Ansprüchen 1 und 6, dadurch gekennzeichnet, daß das Gehäuse (8) mit einem Deckel (10) versehen ist, der mit einem kegelmantelförmig gestalteten Deckelrand (11) allseitig in das Gehäuse eingreift und auf der Hinterfüllung (9) aufliegt.

8. Verfahren nach Anspruch 1, dadurch gekennzeichnet, daß nach dem Aufspritzen einer Edelstahlschale (7) auf den Primärformkern (3) eine zusätzliche Kupferschicht (18) aufgetragen wird.

**Claims**

1. Method for the setting-up of moulds for injection moulding, particularly of tools for the injection moulding of synthetic material, in which the mould consists of a primary mould core, which is provided with a separable separating layer and after that with a sprayed-on layer of molten metal on this, characterised thereby, that initially a water-resistant covering layer (5) consisting of an aqueous solution of a hydrosol (e.g. an aqueous dispersion of acrylate), a latex (e.g. polyvinylacetate), acrylic resin, quartz powder and alkyd lacquer and - after drying thereof - with the separating layer (6) consisting of an aqueous solution of glue, carbohydrates, quartz powder and metal powder, is coated on the primary mould core (3), whereafter ceramic or metal is sprayed-on on the thereby prepared mould core (3, 5, 6) and forms a ceramic or metal mould shell (7), which after subsequent backing (9, 16) with unyielding material represents a mould part (14, 15), which is releasable from the primary mould core (3) by means of introduction of water into the water-soluble separating layer (6).

2. Method according to claim 1, characterised thereby, that the water-resistant covering layer solution (5) is composed as following:

| | |
|---|---|
| Latex (e.g. polyvinylacetate) | 38 % by weight, |
| water | 25 % by weight, |
| quartz powder | 25 % by weight, |
| acrylic resin (acrylate) | 8 % by weight, |
| hydrosol (e.g. HYDROSOL of Hüls-AG) | 3 % by weight and |
| alkyd lacquer (e.g. ALKYDAL of Hüls-AG) | 1 % by weight. |

3. Method according to claim 1, characterised thereby, that the water-soluble separating layer (6) is composed as following:

| Relieved water | 38 % by weight, |
|---|---|
| quartz powder | 36 % by weight, |
| liquid sugar | 15 % by weight, |
| glue | 8 % by weight and |
| metal powder (nickel) | 3 % by weight. |

4. Method according to claim 1, characterised thereby, that the backing (9) consists of epoxyde resin reinforced by quartz sand, metal powder or the like.

5. Method according to claim 1, characterised thereby, that the backing (16) consists of cast metal.

6. Method according to claim 1, characterised thereby, that the backing (9, 16) is filled into a housing (8) inverted over the primary mould core (3) and the metal mould shell (7).

7. Method according to claims 1 and 6, characterised thereby, that the housing (8) is provided with a cover (10), which by a cover rim (11), structured in the shape of a conical shell, engages into the housing at all sides and rests on the backing (9).

8. Method according to claim 1, characterised thereby, that an additional copper layer (18) is applied after the spraying of a fine steel shell (7) onto the primary mould core (3).

**Revendications**

1. Procédé pour la réalisation de moules destinés à l'injection, notamment des outils pour injecter de la matière synthétique, procédé selon lequel le moule comprend un noyau primaire qui est muni d'une couche de séparation amovible recevant, elle même, une couche de pulvérisation en métal fondu,

caractérisé en ce que sur le noyau primaire (3) du moule, on applique tout d'abord une couche de revêtement (5) étanche à l'eau et qui se compose d'une solution aqueuse d'un hydrosol (par exemple une dispersion aqueuse d'acide acrylique), d'un latex (par exemple de l'acétate de polyvinyle), de la résine acrylique, de la farine de quartz et de vernis à base de résine alkyde, et après le séchage de ce revêtement, on applique la couche de séparation (6) qui est formée d'une solution aqueuse de colle, d'hydrates de carbone, de farine de quartz et de poudre métallique, puis on pulvérise de la céramique ou du métal sur le noyau (3, 5, 6) ainsi préparé et on forme une coquille de céramique ou de métal (7) qui, après remplissage de la partie arrière (9, 16) avec une matière non souple, constitue une partie de moule (14, 15) qui se sépare du noyau primaire de moule (3) par introduction d'eau dans la couche de séparation (6) soluble dans de l'eau.

2. Procédé selon la revendication 1, caractérisé en ce que la couche de recouvrement (5) étanche à l'eau a la composition suivante:

| Latex (par exemple acétate de polyvinyle) | 38 % pondéraux |
|---|---|
| Eau | 25 % pondéraux |
| Farine de quartz | 25 % pondéraux |
| Résine acrylique (acide acrylique) | 8 % pondéraux |
| Hydrosol (par exemple hydrosol de Hüls-AG) | 3 % pondéraux |
| Vernis à base de résine alkyde (par exemple Alkydal de Hüls-AG) | 1 % pondéraux |

3. Procédé selon la revendication 1, caractérisé en ce que la couche de séparation (6) soluble dans l'eau a la composition suivante:

| Eau (à basse tension superficielle). | 38 % en poids, |
|---|---|
| Farine de quartz | 36 % en poids, |
| Sucre liquide | 15 % en poids, |
| Colle | 8 % en poids, |
| Poudre métallique (Ni) | 3 % en poids. |

4. Procédé selon la revendication 1, caractérisé en ce que le remplissage de la partie arrière (9) se compose d'une résine époxy renforcée par du sable de quartz, de la poudre métallique ou un produit analogue.

5. Procédé selon la revendication 1, caractérisé en ce que le remplissage de la partie arrière (16) est du métal coulé.

6. Procédé selon la revendication 1, caractérisé en ce que le remplissage de la partie arrière (9, 16) est introduit dans un boîtier (8) rabattu sur le noyau primaire (3) et sur la coquille métallique (7) du moule.

7. Procédé selon les revendications 1 et 6, caractérisé en ce que le boîtier (8) est muni d'un couvercle (10) qui pénètre de tout côté dans le boîtier par un bord de recouvrement (11) à enveloppe tronconique et s'appuie sur le remplissage arrière (9).

8. Procédé selon la revendication 1, caractérisé en ce qu'après projection d'une coquille en acier inoxydable (7) sur le noyau primaire de moule (3), on applique une couche complémentaire de cuivre (18).

Fig . 1

Fig.2

Fig.3          Fig.4

Fig.5

0 117 985

Fig. 6

Fig. 7

5

Fig.8

Fig.9